# EUROPEAN PATENT APPLICATION

(11) **EP 4 641 703 A1**
(43) Date of publication of application: **29.10.2025**
(21) Application number: 24904081.7
(22) Date of filing: 27.11.2024
(51) Int. Cl.: H01M 4/62, H01M 10/0562, H01M 10/052, H01M 4/02

(54) **BINDER FOR ALL-SOLID-STATE BATTERY, BINDER COMPOSITION, POSITIVE ELECTRODE FOR ALL-SOLID-STATE BATTERY, AND ALL-SOLID-STATE BATTERY COMPRISING SAME**

(30) Priority: 12.12.2023 KR 20230179289; 25.11.2024 KR 20240170013
(71) Applicant: LG Energy Solution, Ltd., Seoul 07335 (KR); UIF (University Industry Foundation), Yonsei University, Seoul 03722 (KR)
(72) Inventor: KIM, Donghyeon, Daejeon 34122 (KR); KIM, Ji Young, Daejeon 34122 (KR); SONG, Min Sang, Daejeon 34122 (KR); JUNG, Yoon Seok, Seoul 06288 (KR); KIM, Kyu Tae, Seoul 02636 (KR); PARK, Young Joon, Seoul 02831 (KR)
(74) Representative: Goddar, Heinz J.
(86) International application number: PCT/KR2024/018970
(87) International publication number: WO 2025/127516

(57) **Abstract**

The present disclosure relates to a binder for an all-solid-state battery comprising a main chain crosslinked by a compound comprising two or more thiol functional groups, wherein the main chain comprises an aromatic vinyl monomer-derived repeating unit and a conjugated diene-based monomer-derived repeating unit; a positive electrode for an all-solid-state battery comprising the binder for an all-solid-state battery, a conductive material, a positive electrode active material, and a solid electrolyte; and an all-solid-state battery comprising a positive electrode, a negative electrode, and a solid electrolyte layer disposed between the positive electrode and the negative electrode, wherein the positive electrode comprises the positive electrode for an all-solid-state battery.

## Description

### [Technical Field]

### Cross-citation with Related Applications

This application claims the benefit of priority to Korean Patent Application No. 10-2023-0179289, filed December 12, 2023, and Korean Patent Application No. 10-2024-0170013, filed November 25, 2024.

### Technical Field

The present disclosure relates to a binder for an all-solid-state battery, a binder composition, a positive electrode for an all-solid-state battery, and an all-solid-state battery comprising same.

### [Related Art]

While lithium secondary batteries have been primarily used in small-scale applications such as mobile devices and laptop computers, the research direction has recently expanded to medium and large-scale applications such as energy storage systems (ESS) and electric vehicles (EV).

For these medium- to large-sized lithium secondary batteries, unlike small-sized ones, the operating environment is harsher (e.g., temperature, shock) and more batteries need to be used, so safety needs to be ensured along with good performance and affordable price.

Most commercially available lithium secondary batteries currently utilize organic liquid electrolytes, which are lithium salts dissolved in a flammable organic solvent, and therefore pose a potential risk of leakage, ignition, and explosion. Therefore, the use of solid electrolytes to replace the above organic liquid electrolytes has been garnering attention as an alternative to overcome the above safety issues.

All-solid-state batteries are composed of a positive electrode, a solid electrolyte, and a negative electrode, wherein sulfides and oxides can be used as a solid electrolyte for all-solid-state battery, and a sulfide-based solid electrolyte is the most promising material in terms of lithium ion conductivity.

All-solid-state batteries have a drive mechanism in which lithium ions are transferred across the interface between an active material and a solid electrolyte.

However, due to the volume change of the active material due to the continuous charging and discharging of the all-solid-state battery, the interfacial contact with the solid electrolyte is lost, which is known to be aggravated by smaller driving pressure of the all-solid-state battery, and needs to be improved.

### [Prior Art Reference]

### [Patent Reference]

(Patent Reference 1) Korean Patent No. 10-1970648 (April 15, 2019)

### [Detailed Description of the Invention]

### [Technical Problem]

It is an object of the present disclosure to provide a binder for an all-solid-state battery comprising a main chain crosslinked by a compound comprising two or more thiol functional groups, wherein the main chain comprises an aromatic vinyl monomer-derived repeating unit and a conjugated diene-based monomer-derived repeating unit, wherein the main chain further comprises a polar functional group, thereby to exhibit so-called "self-healing" properties, i.e., preventing interfacial contact loss with the solid electrolyte due to volume changes of the active material upon repeated charging and discharging of the all-solid-state battery, thereby improving initial discharge capacity and Coulombic efficiency under low voltage operation of the all-solid-state battery.

Another object of the present disclosure is to provide a binder composition for an all-solid-state battery comprising a polymer comprising an aromatic vinyl monomer-derived repeating unit and a conjugated diene-based monomer-derived repeating unit; a compound comprising two or more thiol functional groups; and an initiator.

Another object of the present disclosure is to provide a positive electrode for an all-solid-state battery comprising the binder for an all-solid-state battery, a conductive material, a positive electrode active material, and a solid electrolyte.

It is another object of the present disclosure to provide an all-solid-state battery having improved electrochemical and lifetime characteristics by applying a positive electrode active material for the all-solid-state battery to the positive electrode.

### [Technical Solution]

One example of the present disclosure provides a binder for an all-solid-state battery comprising a main chain crosslinked by a compound comprising two or more thiol functional groups, wherein the main chain comprises an aromatic vinyl monomer-derived repeating unit and a conjugated diene-based monomer-derived repeating unit.

The compound comprising at least two thiol functional groups may be at least one selected from the group consisting of 4,4'-biphenyldithiol (BPDT), 1,4-benzenedithiol (BDT), 2,2'-(ethylenedioxy)diethanethiol, poly(ethylene glycol) dithiol, 1,4-butanedithiol, 1,5-pentanedithiol, 1,6-hexanedithiol, 1,16-hexadecanedithiol, 2.2'-thiodiethanethiol, tetraethyleneglycol bis(3-mercaptopropionate), and glycol di(3-mercaptopropionate), pentaerythritol tetrakis(3-mercaptopropionate) (PETMP), trimethylolpropane tris(3-mercaptopropionate) (TMPMP), dipentaerythritol hexakis(3-mercaptopropionate) (DPMP), tris[(3-mercaptopropionyloxy)-ethyl]-isocyanurate (TEMPIC) and pentaerythritol tetrakis (3-mercaptobutylate).

The aromatic vinyl monomer may be one or more selected from the group consisting of styrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene.

The conjugated diene-based monomer may be at least one selected from the group consisting of 1,2-butadiene, 1,3-butadiene, 2,3-dimethyl-1,3-butadiene, piperylene, 3-butyl-1,3-octadiene, isoprene, 2-phenyl-1,3-butadiene, and 2-halo-1,3-butadiene.

The main chain may comprise 10% by weight to 30% by weight of aromatic vinyl monomer-derived repeating unit and 70% by weight to 90% of conjugated diene-based monomer-derived repeating unit.

The compound comprising the two or more thiol functional groups may be comprised in an amount of 0.1 to 20 parts by weight relative to 100 parts by weight of the main chain.

The main chain may further comprise a polar functional group.

The polar functional group may be one or more selected from the group consisting of a carboxylic group, a hydroxy group, an amine group, an amide group, a carbonyl group, an ester group, a glycidyl group, a sulfide group, an urea group, a thiourea group, an imidazole group, and a sulfonic acid group.

The polar functional group may be comprised in an amount of 0.1 to 40 parts by weight relative to 100 parts by weight of the main chain.

Another example of the present invention provides a binder composition for an all-solid-state battery comprising a polymer comprising an aromatic vinyl monomer-derived repeating unit and a conjugated diene-based monomer-derived repeating unit; a compound comprising two or more thiol functional groups; and an initiator.

The binder composition for an all-solid-state battery may further comprise a compound capable of imparting a polar functional group.

The binder composition may further comprise a solvent.

Another example of the present invention provides a positive electrode for an all-solid-state battery comprising the binder for an all-solid-state battery, a conductive material, a positive electrode active material, and a solid electrolyte.

The solid electrolyte may be at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is Ge, Zn or Ga), Li₂S-GeS₂, Li₂S-SiS₂-Li₃PO₄, Li₂S-SiS₂-LiₚMO_{q} (wherein p and q are positive numbers, and M is P, Si, Ge, B, Al, Ga or In), Li₇₋ₓPS₆₋ₓClₓ (wherein 0≤x≤2), Li₇₋ₓPS₆₋ₓBrₓ (wherein 0≤x≤2) and Li₇₋ₓPS₆₋ₓIₓ (wherein 0≤x≤2).

The solid electrolyte may be an argyrodite-type solid electrolyte comprising one or more selected from Li₆PS₅Cl, Li₆PS₅Br and Li₆PS₅I.

Another example of the present disclosure provides a positive electrode for an all-solid-state battery, which is prepared using a binder composition.

Another example of the present disclosure provides an all-solid-state battery, comprising a positive electrode, a negative electrode, and a solid electrolyte layer disposed between the positive electrode and the negative electrode, wherein the positive electrode comprises the positive electrode for an all-solid-state battery.

### [Advantageous Effects]

According to the present disclosure, a binder for an all-solid-state battery comprising a main chain crosslinked by a compound comprising two or more thiol functional groups, wherein the main chain comprises an aromatic vinyl monomer-derived repeating unit and a conjugated diene-based monomer-derived repeating unit, wherein the main chain further comprises a polar functional group, can exhibit so-called "self-healing" properties, i.e., preventing interfacial contact loss with the solid electrolyte due to volume changes of the active material upon repeated charging and discharging of the all-solid-state battery, thereby improving initial discharge capacity and Coulombic efficiency under low voltage operation of the all-solid-state battery.

### [Brief Description of Drawing]

FIG. 1 is a graph depicting the rate characteristics of an all-solid-state battery according to examples and comparative example of the present disclosure.
FIG. 2 is a graph depicting the Coulombic efficiency of an all-solid-state battery according to examples and comparative examples of the present disclosure.
FIG. 3 is a graph depicting the results of Fourier transform infrared spectroscopy (FT-IR) spectral measurements to determine the cross-linking of the main chain by a compound comprising two or more thiol functional groups in the binders for an all-solid-state battery according to examples and comparative examples of the present disclosure.
FIG. 4a is a graph showing the results of NMR spectra (Nuclear Magnetic Resonance) measurements that can confirm the presence of polar functional groups in the binders for an all-solid-state battery according to example and comparative examples of the present disclosure, and FIG. 4b is a magnified view of the results of NMR spectra (Nuclear Magnetic Resonance) measurements of the dotted portion of FIG. 4a.

### [Best Mode]

Examples of the present disclosure are described in detail below. The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Accordingly, it is to be understood that the configurations described in the examples described herein are only the most preferred examples of the invention and do not represent all of the technical ideas of the invention, and that there may be various equivalents and variations that may be substituted for them at the time of the application.

Throughout the specification, whenever any part "includes" any component, it means that it can include more of the other component, not that it excludes the other component, unless specifically stated to the contrary.

In addition, the description limiting or further specifying components may apply to any invention and is not limited to any particular invention, unless otherwise specified.

Also, throughout the description and claims of the present invention, singular terms include the plural ones unless otherwise indicated.

In addition, throughout the description and claims of the present invention, "or" includes "and" unless otherwise noted. Therefore, "including A or B" means all three of the above cases: including A, including B, or including both A and B. Also, all numerical ranges include values at both ends and all intermediate values in between, unless explicitly stated to exclude them.

### <Binder for all-solid-state battery>

The following describes a binder for an all-solid-state battery according to one example of the present disclosure.

The present disclosure relates to a binder for an all-solid-state battery that can prevent an active material, particularly a positive electrode active material, from interfacial contact loss with the solid electrolyte upon repeated charging and discharging of the all-solid-state battery, and improve initial discharge capacity and Coulombic efficiency under low voltage operation. The binder for an all-solid-state battery may refer to a binder prepared by a binder manufacturing process, or may refer to a binder formed inside the positive electrode prepared using a binder composition as described herein.

Coating technology, single crystal active material technology, and functional polymer technology for electrochemical-mechanical stress suppression have been studied to form a stable interface between a positive electrode active material and a solid electrolyte in all-solid-state battery electrodes, and the development of functional polymer technology is garnering attention as an effective approach, particularly due to its capability to suppress electrochemical-mechanical stress at the battery level.

Conventionally, the ability of non-polar rubber-based polymers to suppress electrochemical-mechanical stress has been enhanced by introducing polar functional groups or forming three-dimensional structures.

However, there are limitations in suppressing irreversible interfacial contact loss, which occurs when an all-solid-state battery is subjected to stresses above a certain level.

In order to solve the above problem, the present disclosure provides a binder for an all-solid-state battery comprising a main chain crosslinked by a compound comprising two or more thiol functional groups, wherein the main chain comprises an aromatic vinyl monomer-derived repeating unit and a conjugated diene-based monomer-derived repeating unit, wherein the main chain further comprises a polar functional group, thereby to exhibit so-called "self-healing" properties, i.e., preventing interfacial contact loss with the solid electrolyte due to volume changes of the active material upon repeated charging and discharging of the all-solid-state battery, thereby improving initial discharge capacity and Coulombic efficiency under low voltage operation of the all-solid-state battery, and has completed the invention.

The binder for an all-solid-state battery according to one example of the present disclosure may comprise a main chain crosslinked by a compound comprising two or more thiol functional groups, wherein the main chain comprises an aromatic vinyl monomer-derived repeating unit and a conjugated diene-based monomer-derived repeating unit. The binder for an internal all-solid-state battery as described above may be manufactured as a separate product, or a binder for an all-solid-state battery having the internal structure as described above may be formed inside the manufactured positive electrode. That is, the binder may also refer to a binder formed inside the positive electrode prepared using a binder composition as described hereinafter.

The binder for an all-solid-state battery can improve the suppression ability of electrochemical-mechanical stresses generated inside the all-solid-state battery during the charging and discharging process of the all-solid-state battery by the main chain comprising an aromatic vinyl monomer-derived repeating unit and a conjugated diene-based monomer-derived repeating unit having the structure crosslinked by a compound comprising two or more thiol functional groups.

The main chain included in the binder for an all-solid-state battery comprises an aromatic vinyl monomer-derived repeating unit and a conjugated diene-based monomer-derived repeating unit, thereby comprising an unsaturated double bond within the main chain, wherein a thiyl radical between a thiol group located at a terminal portion of a compound comprising two or more thiol functional groups and the unsaturated double bond within the main chain forms a sulfide bond between the main chain and the compound comprising two or more thiol functional groups after a thiol-ene reaction. The thiol-ene reaction is a reaction in which radicals generated by UV irradiation or heat treatment form an alkyl sulfide from an unsaturated double bond between a thiol group of a compound comprising two or more thiol functional groups and an aromatic vinyl monomer-derived repeating unit or conjugated diene-based monomer-derived repeating unit contained in the main chain, which has the advantage of forming a polymer very quickly with high yield under mild conditions.

In other words, in a compound comprising two or more thiol functional groups, one thiol functional group forms a sulfide bond with an unsaturated double bond of the first main chain, and the other thiol functional group forms a sulfide bond with an unsaturated double bond of the second main chain, so that a crosslinking structure can be formed between the different main chains. The binder for an all-solid-state battery according to the present invention formed in this manner can confer the effect of preventing interfacial contact loss with a solid electrolyte due to volume changes of the active material due to repeated charging and discharging of the all-solid-state battery.

In one example of the present disclosure, the compound containing at least two thiol functional groups may be at least one selected from the group consisting of 4,4'-biphenyldithiol (BPDT), 1,4-benzenedithiol (BDT), 2,2'-(ethylenedioxy)diethanethiol, poly(ethylene glycol) dithiol, 1,4-butanedithiol, 1,5-pentanedithiol, 1,6-hexanedithiol, 1,16-hexadecanedithiol, 2.2'-thiodiethanethiol, tetraethyleneglycol bis(3-mercaptopropionate), and glycol di(3-mercaptopropionate), pentaerythritol tetrakis(3-mercaptopropionate) (PETMP), trimethylolpropane tris(3-mercaptopropionate) (TMPMP), dipentaerythritol hexakis(3-mercaptopropionate) (DPMP), tris[(3-mercaptopropionyloxy)-ethyl]-isocyanurate (TEMPIC) and pentaerythritol tetrakis (3-mercaptobutylate), specifically, trimethylolpropane tris (3-mercaptopropionate) (TMPMP).

In one example of the present disclosure, the compound comprising the two or more thiol functional groups may be comprised in an amount of 0.1 to 20 parts by weight relative to 100 parts by weight of the main chain, such as 0.1 or more, 1 or more, 2 or more, 3 or more, 4 or more, 5 or more, 6 or more, 7 or more, 8 or more, 9 or more, or 10 or more parts by weight, 20 or less, 19 or less, 18 or less, 17 or less, 16 or less, 15 or less, 14 or less, 13 or less, 12 or less, or 11 or less parts by weight of the main chain.

If the content of the compound comprising the two or more thiol functional groups is less than 0.1 parts by weight relative to 100 parts by weight of the main chain, there is a risk that insufficient cross-linking may occur between each main chain included in the binder for an all-solid-state battery according to the present invention, resulting in a decrease in the performance of the battery, such as the initial discharge capacity and Coulombic efficiency of the all-solid-state battery comprising the binder. If the content is more than 20 parts by weight, there may be excessive cross-linking between the main chains, which results in reduced ductility of the binder for an all-solid-state battery, resulting in reduced effectiveness in preventing interfacial contact loss with the solid electrolyte as the volume of the active material changes with repeated charging and discharging of the all-solid-state battery.

In one example of the present disclosure, the aromatic vinyl monomer-derived repeating units included in the main chain may be derived from one or more aromatic vinyl monomers selected from the group consisting of styrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene.

Furthermore, in one example of the present disclosure, the conjugated diene-based monomer-derived repeating unit included in the main chain may be derived from at least one conjugated diene-based monomer selected from the group consisting of 1,2-butadiene, 1,3-butadiene, 2,3-dimethyl-1,3-butadiene, piperylene, 3-butyl-1,3-octadiene, isoprene, 2-phenyl-1,3-butadiene and 2-halo-1,3-butadiene.

In one example of the present disclosure, the main chain may comprise 10% by weight to 30% by weight of aromatic vinyl monomer-derived repeating unit and 70% by weight to 90% of conjugated diene-based monomer-derived repeating unit.

Furthermore, the binder according to the present disclosure may exhibit so-called "self-healing" properties by further incorporating polar functional groups into the main chain, and this capability prevents interfacial contact loss from the solid electrolyte due to volume changes of the positive electrode active material during the continuous charging and discharging of the all-solid-state battery.

In one example of the present disclosure, the polar functional group included in the main chain may be one or more selected from the group consisting of a carboxylic group, a hydroxy group, an amine group, an amide group, a carbonyl group, an ester group, a glycidyl group, a sulfide group, an urea group, a thiourea group, an imidazole group, and a sulfonic acid group.

For example, the polar functional group may include a first hydrogen bonding functional group acting as a "hydrogen bonding donor" and a second hydrogen bonding functional group acting as a "hydrogen bonding acceptor."

In other words, it can be understood that the main chain constituting the binder for an all-solid-state battery according to the present invention includes a polar functional group, wherein the polar functional group may include first and second hydrogen bonding functional groups, wherein the first hydrogen bonding functional group included in the main chain forms hydrogen bonds with the second hydrogen bonding functional group included in the main chain to prevent interfacial contact loss with the solid electrolyte due to volume changes of the active material due to repeated charging and discharging of the all-solid-state battery, exhibiting so-called "self-healing" properties.

The polar functional group may be a first hydrogen bonding functional group acting as a "hydrogen bonding donor," e.g., at least one selected from the group consisting of a carboxylic group, a hydroxy group, an amine group, an amide group, a sulfide group, an urea group, a thiourea group, an imidazole group, and a sulfonic acid group, and preferably a carboxylic group. When the carboxylic group in the first hydrogen bonding functional group acts as a "hydrogen bonding donor," it can be understood that the hydrogen atom in the hydroxyl part of the carboxyl group, excluding the carbonyl group, plays this role. Similarly, if the amine group in the first hydrogen bonding functional group acts as a "hydrogen bonding donor," the two hydrogen atoms of the amine group can be understood to play that role.

The first hydrogen bonding functional group may be formed by mixing a compound containing both a thiol group and the first hydrogen bonding functional group with the unsaturated double bonds in the main chain of the binder for an all-solid-state battery according to the present invention. Through UV irradiation or heat treatment, the thiol-ene reaction enables the grafting of the double bonds in the conjugated diene-based polymer with the thiol group to form alkyl sulfides. In this process, in the compound containing both a thiol group and a first hydrogen bonding functional group, the part of the first hydrogen bonding functional group that is not connected to unsaturated double bonds in the main chain remains in a state capable of forming hydrogen bonds with the second hydrogen bonding functional group.

The compound containing both a thiol group and a first hydrogen bonding functional group may include 3-mercaptopropionic acid, 3-mercaptopropionate, ethylene glycol di-(3-mercaptopropionate), trimethylolpropane tris(3-mercaptopropionate), pentaerythritol tetra(3-mercaptopropionate), dipentaerythritol hexa(3-mercaptopropionate), ethoxylated trimethylolpropane tris(3-mercaptopropionate), tris[2-(3-mercaptopropionyloxy)ethyl]isocyanurate, polycaprolactone tetra(3-mercaptopropionate), pentaerythritol tetra(3-mercaptobutylate), 1,4-bis(3-mercaptobutyryloxy)butane, 1,3,5-tris(3-mercaptobutyloxyethyl)-1,3,5-triazine-2,4,6(1H,3H,5H)-trione or trimethylolpropane tris(3-mercaptobutylate), but are not limited thereto as long as it contains both a thiol group and a hydrogen bonding functional group in one molecule, preferably 3-mercaptopropionic acid.

In addition, a second hydrogen bonding functional group acting as a "hydrogen bonding acceptor" may be at least one selected from the group consisting of, for example, an amine group, a carbonyl group, a carboxylic group, a hydroxy group, an amide group, an ester group, and a glycidyl group, preferably an amine group. If a carboxylic group in a second hydrogen bonding functional group plays a role of "hydrogen bonding acceptor," it can be understood that the unshared electron pair of the oxygen atom of the carbonyl group in the carboxylic group plays this role, and if an amine group in a second hydrogen bonding functional group plays a role of "hydrogen bonding acceptor," it can be understood that the unshared electron pair of the nitrogen atom of the amine group plays this role.

The second hydrogen bonding functional group can be formed by mixing a compound containing both a thiol group and the second hydrogen bonding functional group with the unsaturated double bonds in the main chain of the binder for an all-solid-state battery according to the present invention. Through UV irradiation or heat treatment, the thiol-ene reaction enables the grafting of the unsaturated double bonds in the main chain with the thiol group to form alkyl sulfides. In this process, in the compound containing both a thiol group and a second hydrogen bonding functional group, the part of the second hydrogen bonding functional group that is not connected to unsaturated double bonds in the main chain remains in a state capable of forming hydrogen bonds with the first hydrogen bonding functional group.

The compound comprising both a thiol group and a second hydrogen bonding functional group may include cysteamine, 4-aminobutane-1-thiol, 5-aminobutane-1-thiol, 1-aminopropan-2-thiol, 2-amino-1-butanethiol, 3-amino-1-butanethiol, 4-amino-2-butanethiol, 6-amino-1-hexenethiol or 7-amino-1-heptenethiol, preferably cysteamine, but are not limited thereto as long as it comprises a thiol group and a hydrogen bonding functional group in one molecule.

In one example of the present invention, the polar functional group may be comprised in an amount of 0.1 to 40 parts by weight based on 100 parts by weight of the main chain, such as 0.1 or more, 1 or more, 2 or more, 3 or more, 4 or more, 5 or more, 6 or more, 7 or more, 8 or more, 9 or more, 10 or more, 11 or more, 12 or more, 13 or more, 14 or more, 15 or more, 16 or more, 17 or more, 18 or more, 19 or more, or 20 or more parts by weight, or 40 or less, 39 or less, 38 or less, 37 or less, 36 or less, 35 or less, 34 or less, 33 or less, 32 or less, 31 or less, 30 or less, 29 or less, 28 or less, 27 or less, 26 or less, 25 or less, 24 or less, 23 or less, 22 or less, or 21 or less parts by weight.

If the content of the polar functional group is less than 0.1 parts by weight relative to 100 parts by weight of the main chain, the self-healing effect that can be conferred by the inclusion of the binder for an all-solid-state battery according to the present invention may be reduced and the performance of the all-solid-state battery may be reduced, and if it exceeds 40 parts by weight, there is a risk that the binder with excess polar functional groups may remain in the electrode composite layer and cause side reactions with, for example, a sulfide-based solid electrolyte, comprised in the electrode, the positive electrode of the all-solid-state battery.

### <Binder Composition for All-Solid-State Battery>

The following describes a binder composition for an all-solid-state battery according to another example of the present disclosure.

The present disclosure relates to a binder composition that can be used in the manufacture of a positive electrode for an all-solid-state battery.

A binder composition for an all-solid-state battery according to one example of the present disclosure may comprise a polymer comprising an aromatic vinyl monomer-derived repeating unit and a conjugated diene-based monomer-derived repeating unit; a compound comprising two or more thiol functional groups; and an initiator.

Further, the binder composition may further comprise a compound capable of imparting a polar functional group.

Further, the binder composition may be in the form of a solution further comprising a solvent.

The polymer comprising an aromatic vinyl monomer-derived repeating unit and a conjugated diene-based monomer-derived repeating unit; the compound comprising two or more thiol functional groups; the initiator; and the polar functional group are described above and will not be described in detail herein. Furthermore, the solvent is the same as described in the method for preparing a binder for an all-solid-state battery as described hereinafter, so that a detailed description thereof will also be omitted.

In the binder, the reaction is initiated by the initiator during the drying process in the manufacture of the positive electrode for an all-solid-state battery, and a main chain crosslinked by a compound comprising two or more thiol functional groups are formed, wherein the main chain comprising an aromatic vinyl monomer-derived repeating unit and a conjugated diene-based monomer-derived repeating unit can be included within the positive electrode. In this case, the main chain may further comprise a polar functional group.

Furthermore, the binder composition may further improve internal bonding with the positive electrode components such as the positive electrode active material, solid electrolyte, and conductive material, and adhesion to the positive electrode current collector, as the main chain comprising repeating units as described above is formed as the positive electrode is formed.

### <Method for manufacturing a binder for all-solid-state battery>

There is provided a method for manufacturing a binder for all-solid-state battery.

In one example, a binder for an all-solid-state battery according to the present disclosure may be prepared by adding a polymer comprising an aromatic vinyl monomer-derived repeating unit and a conjugated diene-based monomer-derived repeating unit, a compound comprising two or more thiol functional groups, a compound capable of imparting polar functional groups, and an initiator to a solvent to prepare a mixed solution, and then drying the solution. The mixed solution may be the "binder composition for an all-solid-state battery" described above.

The polymer comprising an aromatic vinyl monomer-derived repeating unit and a conjugated diene-based monomer-derived repeating unit is the part that becomes the main chain after the polymer is prepared as a binder, and the detailed description of the aromatic vinyl monomer-derived repeating unit and the conjugated diene-based monomer-derived repeating unit contained in the polymer is the same as described above, so the detailed description thereon will be omitted hereinafter.

In the case of a compound comprising two or more thiol functional groups and a compound capable of introducing polar functional groups, they can be connected to the main chain of the binder via a thiol-ene reaction involving the unsaturated double bonds of the polymer, which comprises aromatic vinyl monomer-derived repeating units and conjugated diene-based monomer-derived repeating units, with radical formation.

The compound comprising two or more thiol functional groups, and compound capable of introducing polar functional groups are also described above and will not be described in detail herein.

The solvent is not limited as long as it can disperse well a polymer comprising an aromatic vinyl monomer-derived repeating unit and a conjugated diene-based monomer-derived repeating unit, a compound two or more thiol functional groups, and a compound capable of introducing polar functional groups, without affecting the properties thereof, without reacting with sulfide-based solid electrolytes, for example, at least one or two or more selected from the group consisting of 1,1-dichloro-1-fluorethane, propylene dichloride, cyclohexane, methylcyclohexane, ethylcyclohexane, trichloroethylene, 1,2-dichloroethylene, dichloromethane, trichloroethane, dibromomethane, pentane, 1,2-dichloroethane, heptane, hexane, xylene, toluene, butyl butyrate, and n-propyl bromide.

The initiator is not limited as long as it facilitates the radical reaction of thiol groups in a compound comprising two or more thiol functional groups and a compound capable of introducing polar functional groups with the unsaturated double bonds in a polymer comprising an aromatic vinyl monomer-derived repeating unit and a conjugated diene-based monomer-derived repeating unit.

The content of the polymer comprising an aromatic vinyl monomer-derived repeating unit and a conjugated diene-based monomer-derived repeating unit relative to the solvent in the mixed solution for preparing the binder for an all-solid-state battery is preferably 0.005 g/ml to 1 g/ml. If the content of the polymer relative to the solvent is less than 0.005 g/ml, the content of the solvent for manufacturing a binder for an all-solid-state battery according to the present invention may be excessive and the drying time may be unnecessarily delayed in the manufacturing process, and if it exceeds 1 g/ml, the viscosity of the mixed solution may be excessively increased and an uneven reaction may proceed in the mixed solution for manufacturing a binder for an all-solid-state battery.

The initiator may include sulfates, such as potassium persulfate or ammonium persulfate; azo compounds such as 4,4-azobis(4-cyanoglycolic acid), dimethyl-2,2'-azobis(2-methylpropionate), 2,2-azobis(2-amidinopropane) dihydrochloride, 2,2-azobis(2-methylpropionitrile), 2,2-azobis-2-methyl-N-1,1-bis(hydroxymethyl)-2-hydroxyethylpropionamide, 2,2'-azobis(2,4-dimethylvaleronitrile), 2,2'-azobisisobutyronitrile or 1,1'-azobis(1-cyclohexanecarbonitrile); peroxides such as methylethylperoxide, di-t-butylperoxide, acetylperoxide, dicumylperoxide, lauroylperoxide, benzoylperoxide, t-butylperoxy-2-ethylhexanoate, di-isopropylperoxydicarbonate or di-t-butylperoxyisophthalate.

### <Positive electrode for all-solid-state battery>

In accordance with another aspect, there is provided a positive electrode for an all-solid-state battery comprising a binder for an all-solid-state battery according to one example of the present disclosure.

In one example, the positive electrode for an all-solid-state battery may include an all-solid-state battery binder, a conductive material, a positive electrode active material, and a solid electrolyte as described above.

Since the specific contents for the binder for an all-solid-state battery are the same as those described above, a detailed description for the binder included in the positive electrode for an all-solid-state battery according to the present disclosure will be omitted hereinafter.

The binder for an all-solid-state battery may be comprised in an amount of about 0.01 to 10 parts by weight, or 0.01 to 5 parts by weight, or 0.01 to 3 parts by weight, based on 100 parts by weight of the total positive electrode for the all-solid-state battery.

In addition to the binder for an all-solid-state battery according to the present disclosure satisfying the above content ranges, it may further include an acrylic-based binder, a polyvinylidene fluoride (PVDF)-based binder, a polytetrapluoroethylene (PTFE)-based binder, or a butadiene rubber-based binder such as nitrile butadiene rubber (NBR), and various other polymeric binders.

The positive electrode active material included in the positive electrode for an all-solid-state battery is not particularly limited, provided that it is capable of reversible adsorption and release of lithium ions. For example, it may comprise one or more of complex compounds of cobalt, manganese, nickel, iron, or a combination thereof; and lithium.

As a more specific example, a compound represented by any of the following chemical formulae may be used as the core of the positive electrode active material: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (wherein 0 ≤ f ≤ 2); Li_{(3-f)}Fe₂(PO₄)₃ (wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; and J is V, Cr, Mn, Co, Ni, Cu, or any combination thereof.

In one example, the positive electrode active material may have a particle size of about 0.01 µm to 50 µm, and may have the form of secondary particles assembled by agglomeration of a plurality of particles.

The conductive material included in the positive electrode for an all-solid-state battery is not particularly limited as long as it has conductivity without causing chemical changes in the battery, for example, one or a mixture of two or more selected from the group consisting of graphite, such as natural graphite or artificial graphite; carbon black, such as carbon black, acetylene black, Ketjen black, channel black, furnace black, lamp black, or summer black; conductive fibers, such as carbon fibers like vapor grown carbon fibers (VGCFs) or metal fibers; metal powders, such as carbon fluoride, aluminum, or nickel powder; conductive whiskers, such as zinc oxide, or potassium titanate; conductive metal oxides, such as titanium oxide; and conductive materials, such as polyphenylene derivatives.

According to one example of the present disclosure, the positive electrode for an all-solid-state battery may comprise 0 to 30% by weight of conductive material based on 100% by weight of the positive electrode for an all-solid-state battery. According to specific examples of the present invention, the conductive material may be included in an amount of 0.5% by weight or more, 1% by weight or more, 3% by weight or more, or 5% by weight or more within the above ranges, and may also be included in an amount of 15% by weight or less, 10% by weight or less, 7% by weight or less, or 5% by weight or less. For example, the conductive material may be included in a range of 0.5 to 5% by weight relative to 100% by weight of the positive electrode for an all-solid-state battery. If the conductive material is included more than the upper limit, the energy density is reduced due to the low proportion of active material, and if the conductive material contains less than the lower limit, the desired level of electronic conductivity is not achieved, resulting in poor capacity utilization.

The solid electrolyte included in the positive electrode for an all-solid-state battery may be, for example, a sulfide-based solid electrolyte, wherein the sulfide-based solid electrolyte may be represented by Formula 1 below.

[Formula 1] LiₖM²ₗSₘX²ₙ

wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, wherein X² is F, Cl, Br, I, Se, Te or O, and wherein 0<k≤6, 0<l≤6, 0<m≤6 and 0≤n≤6.

For example, in Formula 1 above, M² can be B, Si, Ge, P or N.

For example, in Formula 1 above, X² may be F, Cl, Br, I or O.

For example, the sulfide-based solid electrolyte represented by Formula 1 above may be at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is Ge, Zn or Ga), Li₂S-GeS₂, Li₂S-SiS₂-Li₃PO₄, Li₂S-SiS₂-LiₚMO_{q} (wherein p and q are positive numbers, and M is P, Si, Ge, B, Al, Ga or In), Li₇₋ₓPS₆₋ₓClₓ (wherein 0≤x≤2), Li₇₋ₓPS₆₋ₓBrₓ (wherein 0≤x≤2) and Li₇₋ₓPS₆₋ₓIₓ (wherein 0≤x≤2).

Furthermore, preferably the sulfide-based solid electrolyte may be an argyrodite-type solid electrolyte comprising at least one selected from Li₆PS₅Cl, Li₆PS₅Br and Li₆PS₅I.

A positive electrode for an all-solid-state battery according to one example of the present disclosure may comprise a current collector and a positive electrode active material layer formed on at least one side of the current collector, wherein the positive electrode active material layer may comprise a binder, a solid electrolyte, a conductive material, and a positive electrode active material as described above.

The positive electrode may be prepared according to any method known in the art, and is not limited to any particular method of preparation, but may, for example, be prepared by mixing the positive electrode active material, solid electrolyte, conductive material, and binder in a solvent to form a slurry-phase positive electrode compound, and applying the positive electrode compound to the positive electrode current collector.

The positive electrode current collector is typically made with a thickness of 3 to 500 µm. The positive electrode current collector is not particularly limited as long as it has a high conductivity without causing chemical changes in the battery, for example, stainless steel, aluminum, nickel, titanium, calcined carbon, or aluminum or stainless steel whose surface is treated with carbon, nickel, titanium, or silver can be used. The current collector can also form microscopic irregularities on its surface to increase the adhesion of the positive electrode active material, and can be in various forms, such as films, sheets, foils, nets, porous materials, foams, non-woven materials, etc.

In addition to the positive electrode active material, solid electrolyte, conductive material and binder described above, the positive electrode may further comprise additives such as fillers, coatings, dispersants, ionic conductivity aids and the like. The fillers, coatings, dispersants, or ionic conductivity aids can be any of the materials commonly used in electrodes of all-solid-state secondary batteries.

The thickness of the positive electrode may be, for example, 70 to 150 µm.

### <All-solid-state battery>

Another example of the present disclosure provides an all-solid-state battery, comprising a positive electrode, a negative electrode, and a solid electrolyte layer disposed between the positive electrode and the negative electrode, wherein the positive electrode comprises the positive electrode for an all-solid-state battery.

Since the positive electrode included in the all-solid-state battery has been described in detail above, the negative electrode and solid electrolyte included in an all-solid-state battery will be described in detail below.

The solid electrolyte layer disposed between the positive electrode and negative electrode may comprise, for example, a sulfide-based solid electrolyte. The sulfide-based solid electrolyte may be the same or different from the sulfide-based solid electrolyte included in the positive electrode.

For specific details regarding a sulfide-based solid electrolyte, the aforementioned section on the positive electrode is referred.

The elastic modulus, or Young's modulus, of the solid electrolyte is, for example, 35 GPa or less, 30 GPa or less, 27 GPa or less, 25 GPa or less, 23 GPa or less. The elastic modulus, or Young's modulus, of the solid electrolyte is, for example, 10 to 35 GPa, 15 to 35 GPa, 15 to 30 GPa, or 15 to 25 GPa. By having an elastic modulus in this range, the solid electrolyte is more easily pressurized and/or sintered.

The solid electrolyte layer further comprises, for example, a binder. The binder included in the solid electrolyte layer may be, for example, but not limited to, styrene butadiene rubber (SBR), polytetrafluoroethylene, polyvinylidene fluoride, polyvinylidene fluoride, polyethylene, or the like, as long as it is used as a binder in the art. The binder in the solid electrolyte layer can be the same or different from the binder in the positive electrode active material layer and negative electrode active material layer.

Next, the negative electrode of an all-solid-state battery may include a negative electrode current collector and a negative electrode active material layer.

The thickness of the negative electrode active material layer is, for example, 50% or less, 40% or less, 30% or less, 20% or less, 10% or less, or 5% or less of the thickness of the positive electrode active material layer. The negative electrode active material layer has a thickness of, for example, 1 µm to 20 µm, 2 µm to 10 µm, or 3 µm to 7 µm. If the thickness of the negative electrode active material layer is too thin, the lithium dendrite that forms between the negative electrode active material layer and the negative electrode current collector will collapse the negative electrode active material layer, making it difficult to improve the cycling characteristics of the all-solid-state battery. If the thickness of the negative electrode active material layer is increased excessively, the energy density of the all-solid-state battery will decrease, and the internal resistance of the all-solid-state battery due to the negative electrode active material layer will increase, making it difficult to improve the cycling characteristics of the all-solid-state battery.

The negative electrode active material layer comprises, for example, a negative electrode active material forming an alloy or compound with lithium.

The negative electrode active material comprised in the negative electrode active material layer is, for example, in the form of particles. The negative electrode active material having a particulate form has an average particle size of, for example, 4 µm or less, 3 µm or less, 2 µm or less, 1 µm or less, or 900 nm or less. The negative electrode active material having a particulate form has an average particle size of, for example, 10 nm to 4 µm or less, 10 nm to 3 µm or less, 10 nm to 2 µm or less, 10 nm to 1 µm or less, or 10 nm to 900 nm or less. A negative electrode active material with an average particle size in this range further facilitates the reversible absorption and/or desorption of lithium during charge and discharge. The average particle size of the negative electrode active material may be, for example, a volume equivalent median diameter (D50) measured using a laser particle size distribution meter.

The negative electrode active material comprised in the negative electrode active material layer includes, for example, one or more selected from a carbon-based negative electrode active material and a metallic or semi-metallic negative electrode active material.

Carbon-based negative electrode active material is specifically an amorphous carbon. Amorphous carbon can be, for example, but not necessarily limited to, carbon black (CB), acetylene black (AB), furnace black (FB), Ketjen black (KB), graphene, or any other material that is classified as amorphous carbon in the art. Amorphous carbon is carbon that is not crystalline or has very low crystallinity, which is distinguished from crystalline or graphitic carbon.

The metallic or semi-metallic negative electrode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any material used as a metallic negative electrode active material or semi-metallic negative electrode active material forming an alloy or compound with lithium in the art can be used. For example, nickel (Ni) is not a metallic negative electrode active material because it does not form an alloy with lithium.

The negative electrode active material layer may comprise any one of these negative electrode active materials, or may comprise a mixture of a plurality of different negative electrode active materials. For example, the negative electrode active material layer comprises only amorphous carbon, or comprises one or more selected from the group consisting of gold (Au), platinum (Pt), palladium (Pd), silicon (Si), silver (Ag), aluminum (Al), bismuth (Bi), tin (Sn), and zinc (Zn). In another example, the negative electrode active material layer comprises a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of amorphous carbon and silver (Ag), for example, is weight ratio of 10:1 to 1:2, 5:1 to 1:1, or 4:1 to 2:1, but is not necessarily limited to these ranges and is selected based on the required properties of the all-solid-state battery. This composition of the negative electrode active material further improves the cycling characteristics of all-solid-state battery.

The negative electrode active material comprised in the negative electrode active material layer comprises, for example, a mixture of first particles consisting of amorphous carbon and second particles consisting of metal or semi-metal. Metal or semi-metal includes, for example, gold (Au), platinum (Pt), palladium (Pd), silicon (Si), silver (Ag), aluminum (Al), bismuth (Bi), tin (Sn), and zinc (Zn). A semi-metal is otherwise a semiconductor. The content of the second particles is 8 to 60% by weight, 10 to 50% by weight, 15 to 40% by weight, or 20 to 30% by weight, based on the total weight of the mixture. The content of the second particles in this range further improves, for example, the cycling characteristics of all-solid-state battery.

The negative electrode active material layer comprises, for example, a binder. The binder may be, for example, but not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or the like, as long as they are used as binders in the art. A binder can consist of a single or multiple different binders.

The negative electrode active material layer includes a binder to stabilize the negative electrode active material layer on the negative electrode current collector. Furthermore, cracking of the negative electrode active material layer is suppressed despite volume changes and/or relative position changes of the negative electrode active material layer during charge and discharge. For example, if the negative electrode active material layer does not contain a binder, it is possible for the negative electrode active material layer to be easily separated from the negative electrode current collector. Where the negative electrode active material layer deviates from the negative electrode current collector, the negative electrode current collector is exposed and comes into contact with the solid electrolyte layer, thereby increasing the likelihood of a short circuit. The negative electrode active material layer is produced, for example, by applying a slurry in which the material constituting the negative electrode active material layer is dispersed onto a negative electrode current collector and drying it. Incorporating the binder into the negative electrode active layer enables stable dispersion of the negative electrode active material layer within the slurry. For example, when applying a slurry onto a negative electrode current collector by screen printing, it is possible to prevent clogging of the screen (e.g., clogging by the agglomerate in the negative electrode active material).

The negative electrode current collector is composed of a material that does not react with lithium, for example, i.e., does not form both alloys and compounds. The material consisting of the negative electrode current collector may be, for example, but not necessarily limited to, copper (Cu), stainless steel, titanium (Ti), iron (Fe), cobalt (Co), and nickel (Ni), as long as it is used as an electrode current collector in the art. The negative electrode current collector may consist of one of the metals described above, or may consist of an alloy or coating material of two or more metals. The negative electrode current collector is, for example, in the form of a plate or foil.

The negative electrode active material layer may further comprise additives used in conventional all-solid-state batteries, such as fillers, dispersants, ionic conductors, and the like.

All-solid-state batteries can be manufactured, for example, by fabricating separate positive electrode, negative electrode, and solid electrolyte layer and then laminating these layers.

The present disclosure provides a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Specific examples of the present disclosure are described below. However, the examples described below are intended only to specifically illustrate or describe the present disclosure and are not intended to limit the present invention. Furthermore, any matter not described herein can be sufficiently inferred by a person skilled in the art, and is hereby omitted.

### Manufacturing Example 1: Manufacturing of binder and binder composition for all-solid-state battery

(1) 0.5 g of styrene-butadiene rubber (SBR) as a polymer containing an aromatic vinyl monomer-derived repeating unit and a conjugated diene-based monomer-derived repeating unit, 0.03 g of trimethylolpropane tris (3-mercaptopropionate) (TMPMP) as a compound containing at least two thiol functional groups were introduced to 9.5 g of p-xylene as a solvent with 0.01 g 2,2-azobis(2-methylpropionitrile) as a thermal initiator to prepare a solution for the preparation of a binder for an all-solid-state battery. The above solution was mixed at 300 rpm for 12 hours at 30°C under a normal pressure to prepare a mixed solution.
(2) The above mixed solution was pre-dried at 80°C, under a normal pressure for 1 hour and then vacuum dried at 80°C to prepare a binder for an all-solid-state battery.

The solution for making a binder for an all-solid-state battery corresponds to a binder composition.

### Manufacturing Example 2: Manufacturing of binder and binder composition for all-solid-state battery

(1) 0.5 g of styrene-butadiene rubber (SBR) as a polymer containing an aromatic vinyl monomer-derived repeating unit and a conjugated diene-based monomer-derived repeating unit, 0.135 g of 3-mercapopropionic acid and 0.095 g of cysteamine as a compound capable of introducing polar functional groups, and 0.03 g of trimethylolpropane tris (3-mercaptopropionate) (TMPMP) as a compound containing at least two thiol functional groups were introduced to 9.5 g of p-xylene as a solvent with 0.01 g 2,2-azobis(2-methylpropionitrile) as a thermal initiator to prepare a solution for the preparation of a binder for an all-solid-state battery. The above solution was mixed at 300 rpm for 12 hours at 30°C under a normal pressure to prepare a mixed solution.
(2) The above mixed solution was pre-dried at 80°C, under a normal pressure for 1 hour and then vacuum dried at 80°C to prepare a binder for an all-solid-state battery.

The solution for making a binder for an all-solid-state battery corresponds to a binder composition.

### Comparative Manufacturing Example 1: Manufacturing of binder and binder composition for all-solid-state battery

(1) 0.5 g of styrene-butadiene rubber (SBR) as a polymer containing an aromatic vinyl monomer-derived repeating unit and a conjugated diene-based monomer-derived repeating unit was introduced to 9.5 g of p-xylene as a solvent to prepare a solution for the preparation of a binder for an all-solid-state battery. The above solution was mixed at 300 rpm for 12 hours at 30°C under a normal pressure to prepare a mixed solution.
(2) The above mixed solution was pre-dried at 80°C, under a normal pressure for 1 hour and then vacuum dried at 80°C to prepare a binder for an all-solid-state battery.

The solution for making a binder for an all-solid-state battery corresponds to a binder composition for an all-solid-state battery.

### Example 1: Manufacturing positive electrode for all-solid-state battery

LiNi_{0.8}Co_{0.1}Mn_{0.1}O₂ as a positive electrode active material, Li₆PS₅Cl as a solid electrolyte, Super-C as a conductive material, and the binder composition prepared in Manufacturing Example 1 were mixed in a solvent p-xylene in a weight ratio of 70:27.5:1:1.5 to prepare a positive electrode slurry, and it was applied to one side of an aluminum current collector having a thickness of 15 µm and pre-dried at 80°C under a normal pressure for 1 hour, and then dried at 80°C to prepare a positive electrode for an all-solid-state battery.

### Example 2: Manufacturing positive electrode for all-solid-state battery

A positive electrode for an all-solid-state battery was prepared as in Example 1 above, except that the binder composition prepared in Manufacturing Example 2 was used instead of the binder prepared in Manufacturing Example 1.

### Comparative Example 1: Manufacturing positive electrode for all-solid-state battery

A positive electrode for an all-solid-state battery was prepared as in Example 1 above, except that the binder composition prepared in Comparative Manufacturing Example 1 was used instead of the binder prepared in Manufacturing Example 1.

### Experimental Example 1: FT-IR spectrum analysis

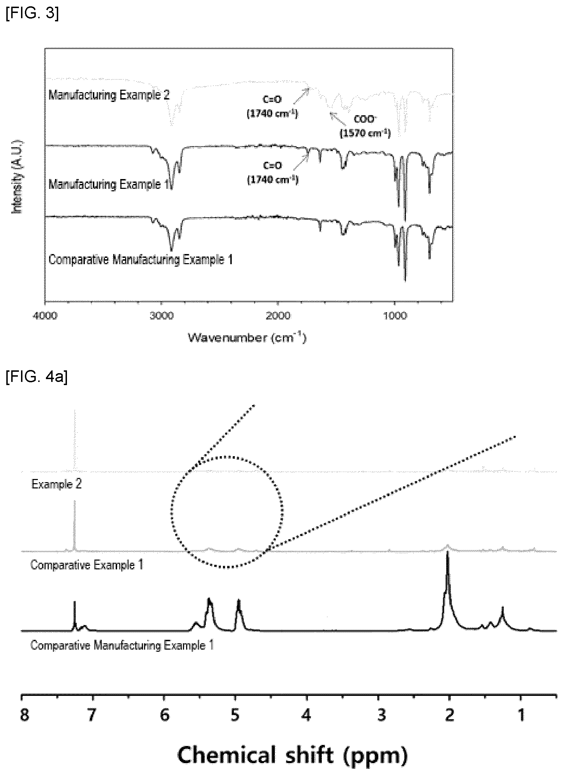

Fourier transform infrared spectroscopy (FT-IR) was used to measure FT-IR spectra for the binder for an all-solid-state battery according to Manufacturing Examples and Comparative Manufacturing Example, and the results are shown in FIG. 3.

Referring to FIG. 3, it can be seen that the common spectra seen in Manufacturing Example 1, Manufacturing Example 2, and Comparative Manufacturing Example 1 are due to the SBR in the polymeric state. In addition, a spectrum around 1740 cm⁻¹ is seen in both Manufacturing Example 1 and Manufacturing Example 2, indicating that crosslinks are formed due to the addition of TMPMP. Finally, Manufacturing Example 2 shows a spectrum around 1570 cm⁻¹, indicating hydrogen bonding between the two polar functional groups, 3-mercaptopropionic acid and cysteamine, which confirms that the binder has self-healing properties.

### Experimental Example 2: NMR spectrum analysis

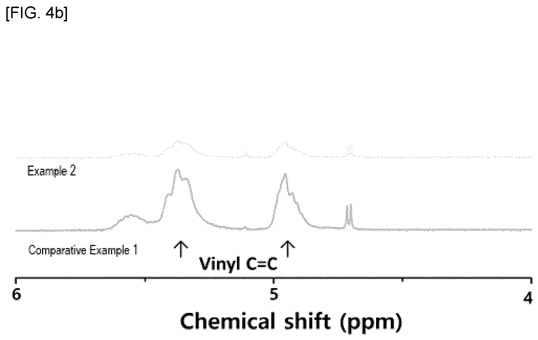

Nuclear magnetic resonance spectroscopy (NMR) spectra were measured for the binder formed inside the positive electrode for an all-solid-state battery according to Example 2 and Comparative Example 1, and for the binder composition for an all-solid-state battery of Comparative Manufacturing Example 1, and the results are shown in FIG. 4.

Referring to FIG. 4, it can be seen that the common spectra seen in both Example 2 and Comparative Example 1 result from the SBR in the polymeric state according to Comparative Manufacturing Example 1. Furthermore, the smaller peak sizes observed around 4.9 ppm and 5.5 ppm, corresponding to the vinyl groups, in Example 2 compared to Comparative Example 1, indicate that the binder formed inside the positive electrode for an all-solid-state battery according to the present invention has polar functional groups introduced into the C=C double bonds of the SBR.

### Experimental Example 3: Evaluating rate characteristics and lifetime characteristics of all-solid-state battery

Rate characteristics and lifetime characteristics were evaluated for all-solid-state batteries comprising positive electrodes according to Examples 1, 2 and Comparative Example 1.

The all-solid-state battery was fabricated by the following method.

150 mg of Li₆PS₅Cl was loaded as the solid electrolyte into a mold cell and pelletized at a pressure of 70 MPa. The positive electrodes according to Examples 1, 2 and Comparative Example 1 prepared by the above process was loaded on one side of the solid electrolyte pellet, and 100 mg of a composite negative electrode mixed with Li_{0.5}In and a solid electrolyte in a weight ratio of 8:2 was loaded on the other side and pressurized at a pressure of 370 MPa to produce a semi all-solid-state battery. To analyze the performance of each electrode according to the operation pressure, the tightening of the bolts was adjusted so that 70 MPa and 0.33 MPa operation pressures were applied, respectively. For the above semi all-solid-state battery evaluation, the battery was sealed to prevent atmospheric penetration into the battery interior and transferred to a constant temperature chamber for the following electrochemical evaluation.

For the all-solid-state batteries comprising positive electrodes according to Examples 1, 2 and Comparative Example 1, the rate characteristics were evaluated by the following test method.

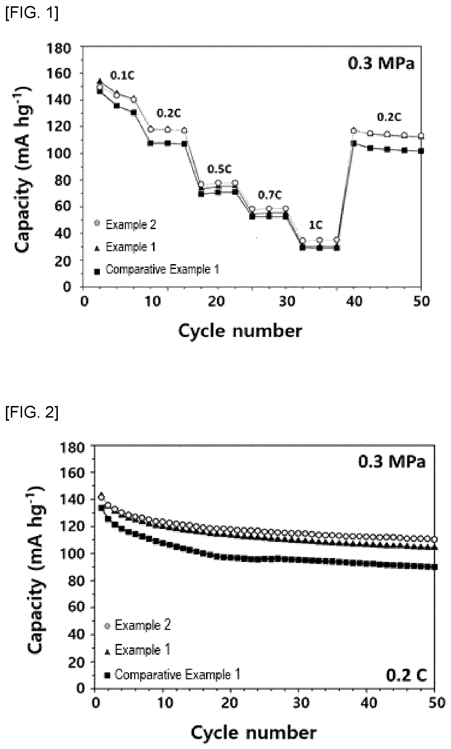

The rate characteristics were measured at 30°C, CC mode, with a operation voltage of 3.0V to 4.3V, and a current condition of 0.1C - 0.2C - 0.5C - 0.7C - 1.0C - 0.2C, with five charge and discharge cycles each. The results are shown in Table 1 and FIG. 1 below.

For the all-solid-state batteries comprising the positive electrode according to Example 1 and Comparative Example 1, the lifetime characteristics were evaluated by the following test method.

It was charged at a rate (C-rate) of 0.1C until the voltage reached 4.3V (vs. Li) and cutoff at 4.3V (vs. Li). It was then discharged at a rate (C-rate) of 0.2C until the voltage at discharge was 3.0V (vs. Li) (1^{st} cycle). The above charge and discharge test was repeated for 50 cycles to measure the capacity retention of the discharge capacity, and the results are shown in Table 1 and FIG. 2.

**[Table 1]**

| | Operation pressure (MPa) | Initial discharge capacity (mAh/g) | Initial Coulombic efficiency (%) | Discharge capacity for 50 cycles (mAh/g) |
|---|---|---|---|---|
| Comparative Example 1 | 0.33 | 146.5 | 73.4 | 90.1 |
| Example 1 | 0.33 | 153.6 | 73.8 | 104.3 |
| Example 2 | 0.33 | 151.5 | 74.1 | 110.2 |
| Comparative Example 1 | 70 | 173.9 | 79.7 | - |
| Example 1 | 70 | 175.1 | 80.0 | - |
| Example 2 | 70 | 174.0 | 79.7 | - |

Referring to Table 1, and FIG. 1 and 2, it can be seen that the all-solid-state batteries comprising positive electrodes according to Examples 1 and 2 exhibit superior initial discharge capacity and initial Coulombic efficiency at lower driving pressure (0 MPa) compared to the all-solid-state battery comprising a positive electrode of Comparative Example 1. On the other hand, when the operation pressure is high (70 MPa), it can be seen that the difference in performance between the all-solid-state batteries comprising positive electrodes according to Examples 1, 2 and Comparative Example 1 is insignificant. It can be understood that the binder having "self-healing" properties according to the present invention is effective in suppressing the interfacial contact loss of the active material and solid electrolyte that occurs when the operation pressure is low. Furthermore, it can be seen that an all-solid-state battery comprising a positive electrode according to Example 2, wherein the main chain contained in the binder is crosslinked by a compound comprising two or more thiol groups, and wherein the binder includes a polar functional group introduced into the main chain, has the superior lifetime characteristics.

While preferred examples of the present invention have been described in detail above, the scope of the invention is not limited thereto, and various modifications and improvements by those skilled in the art utilizing the basic concepts of the invention as defined by the following claims are also within the scope of the invention.

## Claims

1. A binder for an all-solid-state battery comprising a main chain crosslinked by a compound containing two or more thiol functional groups,
wherein the main chain comprises an aromatic vinyl monomer-derived repeating unit and a conjugated diene-based monomer-derived repeating unit.

2. The binder for an all-solid-state battery according to claim 1,
wherein the compound comprising at least two thiol functional groups is at least one selected from the group consisting of 4,4'-biphenyldithiol (BPDT), 1,4-benzenedithiol (BDT), 2,2'-(ethylenedioxy)diethanethiol, poly(ethylene glycol) dithiol, 1,4-butanedithiol, 1,5-pentanedithiol, 1,6-hexanedithiol, 1,16-hexadecanedithiol, 2.2'-thiodiethanethiol, tetraethyleneglycol bis(3-mercaptopropionate), and glycol di(3-mercaptopropionate), pentaerythritol tetrakis(3-mercaptopropionate) (PETMP), trimethylolpropane tris(3-mercaptopropionate) (TMPMP), dipentaerythritol hexakis(3-mercaptopropionate) (DPMP), tris[(3-mercaptopropionyloxy)-ethyl]-isocyanurate (TEMPIC) and pentaerythritol tetrakis (3-mercaptobutylate).

3. The binder for an all-solid-state battery according to claim 1,
wherein the aromatic vinyl monomer is one or more selected from the group consisting of styrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene.

4. The binder for an all-solid-state battery according to claim 1,
wherein the conjugated diene-based monomer is at least one selected from the group consisting of 1,2-butadiene, 1,3-butadiene, 2,3-dimethyl-1,3-butadiene, piperylene, 3-butyl-1,3-octadiene, isoprene, 2-phenyl-1,3-butadiene, and 2-halo-1,3-butadiene.

5. The binder for an all-solid-state battery according to claim 1,
wherein the main chain comprises 10% by weight to 30% by weight of aromatic vinyl monomer-derived repeating unit and 70% by weight to 90% of conjugated diene-based monomer-derived repeating unit.

6. The binder for an all-solid-state battery according to claim 1,
wherein the compound comprising the two or more thiol functional groups is comprised in an amount of 0.1 to 20 parts by weight relative to 100 parts by weight of the main chain.

7. The binder for an all-solid-state battery according to claim 1,
wherein the main chain further comprises a polar functional group.

8. The binder for an all-solid-state battery according to claim 7,
wherein the polar functional group is one or more selected from the group consisting of a carboxylic group, a hydroxy group, an amine group, an amide group, a carbonyl group, an ester group, a glycidyl group, a sulfide group, an urea group, a thiourea group, an imidazole group, and a sulfonic acid group.

9. The binder for an all-solid-state battery according to claim 7,
wherein the polar functional group is comprised in an amount of 0.1 to 40 parts by weight relative to 100 parts by weight of the main chain.

10. A binder composition for an all-solid-state battery comprising a polymer comprising an aromatic vinyl monomer-derived repeating unit and a conjugated diene-based monomer-derived repeating unit; a compound comprising two or more thiol functional groups; and an initiator.

11. The binder composition for an all-solid-state battery according to claim 10,
wherein the binder composition for an all-solid-state battery further comprises a compound capable of introducing a polar functional group.

12. The binder composition for an all-solid-state battery according to claim 10,
wherein the binder composition further comprises a solvent.

13. A positive electrode for an all-solid-state battery, comprising the binder according to claim 1, a conductive material, and a positive electrode active material and a solid electrolyte.

14. The positive electrode for an all-solid-state battery according to claim 10,
wherein the solid electrolyte is at least one selected from the group consisting of Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is Ge, Zn or Ga), Li₂S-GeS₂, Li₂S-SiS₂-Li₃PO₄, Li₂S-SiS₂-LiₚMO_{q} (wherein p and q are positive numbers, and M is P, Si, Ge, B, Al, Ga or In), Li₇₋ₓPS₆₋ₓClₓ (wherein 0≤x≤2), Li₇₋ₓPS₆₋ₓBrₓ (wherein 0≤x≤2) and Li₇₋ₓPS₆₋ₓIₓ (wherein 0≤x≤2).

15. The positive electrode for an all-solid-state battery according to claim 10,
wherein the solid electrolyte is an argyrodite-type solid electrolyte comprising one or more selected from Li₆PS₅Cl, Li₆PS₅Br and Li₆PS₅I.

16. A positive electrode for an all-solid-state battery manufactured by using the binder composition according to claim 10.

17. An all-solid-state battery, comprising the positive electrode;
a negative electrode; and
a solid electrolyte layer disposed between the positive electrode and negative electrode,
wherein the positive electrode comprises the positive electrode for an all-solid-state battery according to claim 10 or 16.
